# EUROPÄISCHE PATENTSCHRIFT

(11) **EP 2 916 258 B1**
(45) Veröffentlichungstag und Bekanntmachung des Hinweises auf die Patenterteilung: **01.08.2018**
(21) Anmeldenummer: 14158071.2
(22) Anmeldetag: 06.03.2014
(51) Int. Cl.: G06K 7/10, G06K 7/14

(54) **2D-BARCODE-SCANNER**
2D BARCODE SCANNER
SCANNER DE CODE BARRE 2D

(43) Veröffentlichungstag der Anmeldung: 09.09.2015
(73) Patentinhaber: SKIDATA AG, 5083 Grödig/Salzburg (AT)
(72) Erfinder: Leitner, Markus, 83101 Rohrdorf (DE); Hofmann, Angelika, Dr., 81379 München (DE)
(74) Vertreter: Karakatsanis, Georgios

(56) Entgegenhaltungen:
- EP-A1- 2 463 804
- WO-A2-2008/016510

## Beschreibung

Die vorliegende Erfindung bezieht sich auf einen 2D-Barcode-Scanner umfassend eine Digitalkamera gemäß dem Oberbegriff des Patentanspruchs 1.

2D-Barcode-Scanner erfassen einen auszulesenden eindimensionalen Barcode, einen QR- oder andere zweidimensionale Codes, im Folgenden als Barcodes bezeichnet, mit Hilfe einer Digitalkamera und einer der Digitalkamera nachgeschalteter Auswerteelektronik, welche das mittels der Kamera aufgenommene Bild aufbereitet und den Barcode digital erfasst. Mittels eines 2D-Barcode-Scanners kann in vorteilhafter Weise eine auf einer zweidimensionalen Fläche angeordnete Information in einem Schritt erfasst werden.

2D-Barcode-Scanner umfassen nach dem Stand der Technik ein Gehäuse mit einem Lesefenster, vor dem der auszulesende Barcode angeordnet wird. An der dem auszulesenden Barcode abgewandten Seite des Lesefensters ist eine Digitalkamera angeordnet, deren Bilder das Lesefenster direkt oder über eine Umlenkspiegelanordnung abdecken. Durch das Vorsehen einer Umlenkspiegelanordnung wird eine kompakte Bauweise erzielt, da der zum Erfassen des gesamten Lesefensters erforderliche Abstand zwischen der Kameralinse und dem Lesefenster über die Umlenkspiegel realisiert wird.

In der Regel umfassen in 2D-Barcode-Scannern integrierte Kameras eine integrierte Beleuchtung in Form einer internen LED, um die Barcodefläche auszuleuchten und dadurch eine fehlerfreie Erfassung derselben zu gewährleisten. In der Praxis reicht jedoch die dadurch erzielbare Ausleuchtung nicht aus, um eine fehlerfreie Erfassung über den gesamten Bereich des Lesefensters zu erzielen oder Sonderformen von Barcodes zu erfassen. Dies ist z.B. der Fall bei der Verwendung von Barcode-Farben, die spezielle Eigenschaften in einem definierten Bereich außerhalb des sichtbaren Lichtspektrums aufweisen, welche nur durch ausreichende Ausleuchtung in diesem definierten Bereich außerhalb des sichtbaren Lichtspektrums erfassbar sind. Zudem kommt es durch die Anordnung der integrierten Beleuchtung nahe der Kameralinse sehr leicht zu Reflexionen am Lesefenster, die die Auswertung der Daten erschweren oder unmöglich machen.

Aus diesen Gründen ist aus dem Stand der Technik bekannt, externe Lichtquellen, z.B. LEDs vorzusehen, mit deren Hilfe ein an der der Digitalkamera abgewandten Seite des Lesefensters angeordneter auszulesender Barcode ausreichend hell und homogen ausgeleuchtet werden kann.

Auch hierbei entstehen an der Innenseite des Lesefensters, auch bei entspiegeltem Glas, Lichtreflexionen, so dass die Digitalkamera in nachteiliger Weise ein Spiegelbild der Beleuchtung ebenfalls erfasst, welches dem auszulesenden Barcode überlagert ist. In der Regel kommt es dabei zu sehr hellen Spots im Bild der Digitalkamera, den sogenannten Hotspots, welche in einer Übersteuerung der Kamera resultieren können, wodurch eine fehlerfreie Barcodeauswertung nicht mehr möglich ist.

Eine Aufteilung der Beleuchtung auf mehrere Lichtquellen würde die Intensität der Helligkeit der einzelnen Hotspots reduzieren aber in nachteiliger Weise die Anzahl der Hotspots erhöhen. Des Weiteren würde eine Verbesserung und Optimierung der Antiflexionsbeschichtung auf der Fensterinnenseite des Lesefensters des 2D-Barcode-Scanners nur für einen eingegrenzten Wellenlängenbereich funktionieren und in nachteiliger Weise eine schmalbandige Beleuchtung, d.h. eine Beleuchtung in einem sehr engen Frequenzband erfordern, was das Auslesen von Barcodes über das volle Farbspektrum oder gar Spektren außerhalb des sichtbaren Wellenlängenbereichs verhindern würde.

Eine weitere Möglichkeit Hotspots zu vermeiden könnte darin bestehen, das Lesefenster schräg zur optischen Achse der Digitalkamera von den Seiten her zu beleuchten, was in einer homogenen Ausleuchtung in der Ebene des Lesefensters resultieren würde; dies würde auch die störenden Hotspots reduzieren bzw. außerhalb des Bildbereichs verschieben. In nachteiliger Weise würde diese Vorgehensweise jedoch auch darin resultieren, dass die Ausleuchtung und das Auslesen eines Barcodes nur in einer Ebene optimal sind. Aufgrund der dadurch erzielbaren sehr geringen Homogenität der Ausleuchtung über die Tiefe ergibt sich in weiter vom Lesefenster entfernten Bereichen eine ungeeignete Ausleuchtung.

Aus der WO 2008/016510 A2 ist ein Barcode-Scanner bekannt, bei dem ein optisches Element vorgesehen ist, mittels dessen das Licht einer Lichtquelle nicht senkrecht auf das Lesefenster des Barcode-Scanners fällt. Hierbei ist jeder Einfallwinkel mit Ausnahme des rechten Winkels erlaubt.

Aus der EP 2 463 804 A1 ist Codesymbol-Lesesystem mit digitaler Bildverarbeitung zum Lesen sichtbarer Codesymbole und unsichtbarer Sicherheitstyp-Codesymbole in einer benutzertransparenten Weise unter Verwendung eines Steuerprozesses mit Umschaltung zwischen sichtbarer und unsichtbarer Beleuchtung während Datendetektions- und - verarbeitungsoperationen bekannt.

Der vorliegenden Erfindung liegt die Aufgabe zugrunde, einen 2D-Barcode-Scanner anzugeben, bei dem eine reflexionsarme, möglichst homogene Ausleuchtung über einen Tiefenbereich von einigen Zentimetern vor dem Lesefenster gewährleistet wird. Insbesondere sollen die durch den Einsatz von Lichtquellen entstehenden und eine fehlerfreie Barcodeauswertung beeinträchtigenden Hotspots vermieden werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein 2D-Barcode-Scanner vorgeschlagen, umfassend ein Gehäuse mit einem Lesefenster und eine im Gehäuse angeordnete Digitalkamera zur Erfassung des Bereiches des Lesefensters direkt oder über eine Umlenkspiegelanordnung, wobei zur Ausleuchtung eines Bereiches vor dem Lesefenster an der der Kamera abgewandten Seite des Lesefensters mehrere im Gehäuse angeordnete externe Lichtquellen vorgesehen sind, bei dem die externen Lichtquellen jeweils mit einer Vorsatzoptik versehen sind, durch die das Licht der externen Lichtquellen derart verteilt wird, dass die für die externen Lichtquellen direkt oder über eventuell vorhandene Umlenkspiegel entstehenden Reflexionspfade von der Innenseite des Lesefensters zurück in die Kamera nicht oder mit einer sehr geringen Intensität ausgeleuchtet werden, wodurch an der Innenseite des Lesefensters entstehende Lichtreflexionen, die dem auszulesenden Barcode als sehr helle Spots, nämlich Hotspots, im Bild der Digitalkamera überlagert werden, vermieden werden oder deren Intensität signifikant verringert wird.
Hierbei ist die den externen Lichtquellen zugeordnete Vorsatzoptik individuell für die jeweilige Lichtquelle und deren Anordnung und Orientierung ausgeführt; die Bereiche der Ebene des Lesefensters, die Reflexionspfaden einer Lichtquelle entsprechen, werden von Lichtquellen ausgeleuchtet, für die diese Bereiche keinen Reflexionspfad darstellen.

Im Rahmen einer Weiterbildung der Erfindung wird zudem vorgeschlagen, zusätzlich zum Vorsehen der Vorsatzoptik die zumindest eine externe Lichtquelle derart anzuordnen, dass der Ort der entstehenden Hotspots an einen Rand des Lesefensters verschoben wird, in dem ein Auslesen eines Barcodes weniger häufig oder wahrscheinlich ist. Dadurch wird der durch das Vorsehen der Vorsatzoptik signifikant verringerte Einfluss der Hotspots weiter verringert.

Durch die erfindungsgemäße Konzeption der Strahlformung wird die Selbstblendung der Digitalkamera eines 2D-Barcode-Scanners aufgrund der Reflexionen der externen Beleuchtungsquellen an der Innenseite des Lesefensters vermieden oder signifikant reduziert. Ferner wird durch die erzielbare Verschiebung von entstehenden Hotspots mit gemäß der Erfindung reduzierter Intensität an einen Rand des Lesefensters der Einfluss der Hotspots weiter reduziert.

Hierbei kann die zumindest eine externe Lichtquelle in der Ebene der Digitalkamera des 2D-Barcode-Scanners angeordnet werden, wodurch eine große Homogenität der Beleuchtung über die Tiefe, d.h. eine gleichmäßige Ausleuchtung eines Bereiches nicht nur unmittelbar vor dem Lesefenster sondern auch darüber hinaus erzielbar ist.

Erfindungsgemäß werden mehr als eine externe Lichtquellen verwendet, welche vorzugsweise in der Ebene der Digitalkamera angeordnet sind. Gemäß der Erfindung kann zumindest ein Teil der externen Lichtquellen nicht in der Ebene der Digitalkamera angeordnet sein, was insbesondere bei Verwendung einer Umlenkspiegelanordnung der Fall sein kann.

Hierbei ist die einer externen Lichtquelle zugeordnete Vorsatzoptik individuell für die jeweilige Lichtquelle und deren Orientierung und Anordnung ausgeführt, da jede Lichtquelle in der Regel eine unterschiedliche Abstrahlcharakteristik aufweist und alle verwendeten externen Lichtquellen erst gemeinsam eine homogene Beleuchtungsstärke in der Ebene des Lesefensters erreichen. Für jede einzelne Lichtquelle werden, wie bereits erläutert, die Bereiche des Lesefensters mit Reflexionspfaden in die Kamera nicht oder nur gering ausgeleuchtet; diese Bereiche werden von den Lichtquellen ausgeleuchtet, für die dieser Bereich keinen Reflexionspfad darstellt.

Im Rahmen weiterer Ausführungsformen der Erfindung kann ein Teil der vorzugsweise als LEDs ausgeführten Lichtquellen im sichtbaren Bereich und ein Teil im nahinfraroten Bereich mit einer Wellenlänge von 800 bis 900 nm ausstrahlen. Auf diese Weise können wahlweise sowohl herkömmliche Barcodes als auch im Nahinfrarotbereich auslesbare Barcodes mittels eines 2D-Barcode-Scanners ausgelesen werden.

Die Erfindung wird im Folgenden anhand der beigefügten Figuren beispielhaft näher erläutert. Es zeigen:
Figur 1: Eine schematische perspektivische Schnittansicht einer erfindungsgemäßen Ausgestaltung eines 2D-Barcode-Scanners, bei dem eine Umlenkspiegelanordnung vorgesehen ist; und
Figur 2: Eine schematische perspektivische Schnittansicht des in Figur 1 gezeigten 2D-Barcode-Scanners.

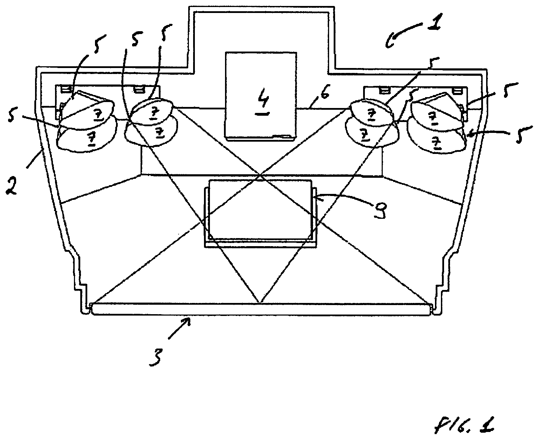

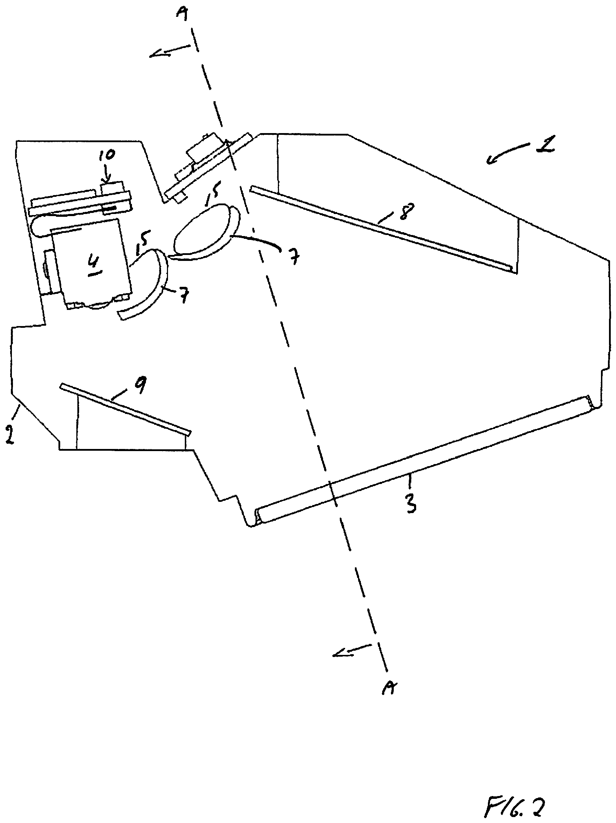

Gemäß der Erfindung und bezugnehmend auf Figur 1 weist ein gemäß der Erfindung ausgeführter 2D-Barcode-Scanner 1 ein Gehäuse 2 mit einem Lesefenster 3, vor dem der nicht dargestellte auszulesende Barcode angeordnet wird. Ferner ist an der dem auszulesenden Barcode abgewandten Seite des Lesefensters 3 eine Digitalkamera 4 angeordnet, deren Bilder das gesamte Lesefenster 3 über eine Umlenkspiegelanordnung umfassend einen ersten und einen zweiten Umlenkspiegel abdecken, wodurch eine kompakte Bauweise erzielt wird, da der zum Erfassen des gesamten Lesefensters 3 erforderliche Abstand zwischen der Kameralinse und dem Lesefenster 3 über die Umlenkspiegel realisiert wird. Bei der Ansicht gemäß Figur 2 ist der zweite Umlenkspiegel gezeigt und mit dem Bezugszeichen 9 versehen.

Der beispielhaft gezeigte 2D-Barcode-Scanner 1 weist acht externe als LEDs ausgeführte Lichtquellen 5 auf, die in der Ebene 6 der Kamera 4 spiegelsymmetrisch zu der Projektion einer Symmetrieachse des Lesefensters 3 auf diese Ebene 6 angeordnet sind. Gemäß der Erfindung ist jede externe Lichtquelle 5 mit einer Vorsatzoptik 7 umfassend zumindest eine Linse versehen, durch die das Licht der externen Lichtquelle 5 derart verteilt wird, dass die für die externe Lichtquelle 5 entstehenden Reflexionspfade von der Innenseite des Lesefensters 3 über die Umlenkspiegelanordnung zurück in die Digitalkamera 4 nicht oder mit einer sehr geringen Intensität ausgeleuchtet werden, wodurch die aufgrund der Reflexionen entstehenden sehr hellen Spots im Bild der Digitalkamera 4, die sogenannten Hotspots, vermieden oder deren Intensität signifikant verringert wird.

Erst durch sämtliche externe Lichtquellen 5 wird eine homogene Beleuchtungsstärke in der Ebene des Lesefensters 3 erreicht, wobei die Bereiche der Ebene des Lesefensters 3 , die Reflexionspfaden einer Lichtquelle 5 entsprechen nur oder für den Fall, dass die für die externe Lichtquelle 5 entstehenden Reflexionspfade von der Lichtquelle mit einer sehr geringen Intensität ausgeleuchtet werden, hauptsächlich von Lichtquellen 5 ausgeleuchtet werden, für die diese Bereiche keinen Reflexionspfad darstellen. Die den Lichtquellen 5 zugeordneten Vorsatzoptiken 7 sind individuell für die jeweilige Lichtquelle 5 und deren Orientierung und Anordnung ausgeführt. Die Berechnung der Ausgestaltung der Linsen der Vorsatzoptiken erfolgt vorzugsweise mittels einer Computersimulation.

Gegenstand der Figur 2 ist eine Seitenansicht des in Figur 1 gezeigten 2D-Barcode-Scanners 1, bei der der erste und zweite Umlenkspiegel 8, 9 erkennbar sind. In dieser Ansicht sind zwei der insgesamt 8 LEDs 5 erkennbar, wobei den LEDs 5 jeweils eine individuelle Vorsatzoptik 7 vorgeschaltet ist. Figur 1 entspricht einer Schnittansicht entlang der Linie A-A in Figur 2.

Durch die einer Lichtquelle 5 zugeordnete Vorsatzoptik 7 wird gewährleistet, dass die für die jeweilige externe Lichtquelle entstehenden Reflexionspfade von der Innenseite des Lesefensters 3 im vorliegenden Fall über die Umlenkspiegelanordnung zurück in die Digitalkamera 4 nicht oder mit einer sehr geringen Intensität ausgeleuchtet werden. Wie bereits erläutert, werden die Bereiche der Ebene des Lesefensters 3, die Reflexionspfaden einer Lichtquelle 5 entsprechen von der anderen Lichtquelle 5 ausgeleuchtet, für die diese Bereiche keinen Reflexionspfad darstellen. In Figur 2 ist die der Digitalkamera 4 zugeordnete Auswerteelektronik, welche das mittels der Digitalkamera 4 aufgenommene Bild aufbereitet und den Barcode digital erfasst, schematisch dargestellt und mit dem Bezugszeichen 10 versehen.

## Patentansprüche

1. 2D-Barcode-Scanner (1), umfassend ein Gehäuse (2) mit einem Lesefenster (3) und eine im Gehäuse (2) angeordnete Digitalkamera (4) zur Erfassung des Bereiches des Lesefensters (3) direkt oder über eine Spiegelanordnung (8, 9), wobei zur Ausleuchtung eines Bereiches vor dem Lesefenster (3) an der der Digitalkamera (4) abgewandten Seite des Lesefensters (3) mehrere im Gehäuse (2) angeordnete externe Lichtquellen (5) vorgesehen sind, wobei erst durch sämtliche externe Lichtquellen (5) eine homogene Beleuchtungsstärke in der Ebene des Lesefensters (3) erreicht wird, **dadurch gekennzeichnet, dass** die externen Lichtquellen (5) jeweils mit einer Vorsatzoptik (7) versehen sind, durch die das Licht der externen Lichtquellen (5) derart verteilt wird, dass die für die externen Lichtquellen (5) entstehenden Reflexionspfade an der Innenseite des Lesefensters (3) zurück in die Kamera (4) nicht oder mit einer sehr geringen Intensität ausgeleuchtet werden, wodurch an der Innenseite des Lesefensters (3) entstehende Lichtreflexionen, die dem auszulesenden Barcode als sehr helle Spots im Bild der Digitalkamera (4) überlagert werden, vermieden werden oder deren Intensität signifikant verringert wird, dass die den externen Lichtquellen (5) zugeordnete Vorsatzoptik (7) individuell für die jeweilige Lichtquelle (5) und deren Anordnung und Orientierung ausgeführt ist und dass die Bereiche der Ebene des Lesefensters (3), die Reflexionspfaden einer Lichtquelle (5) entsprechen, von Lichtquellen (5) ausgeleuchtet werden, für die diese Bereiche keinen Reflexionspfad darstellen.

2. 2D-Barcode-Scanner (1) nach Anspruch 1, **dadurch gekennzeichnet, dass** die externen Lichtquellen (5) derart angeordnet sind, dass der Ort der entstehenden sehr hellen Spots im Bild der Digitalkamera (4) an einen Rand des Lesefensters (3) verschoben wird, in dem ein Auslesen eines Barcodes weniger häufig oder wahrscheinlich ist.

3. 2D-Barcode-Scanner (1) nach Anspruch 1 oder 2, **dadurch gekennzeichnet, dass** die externen Lichtquellen (5) in der Ebene der Digitalkamera (4) des 2D-Barcode-Scanners (1) angeordnet sind.

4. 2D-Barcode-Scanner (1) nach Anspruch 1, 2 oder 3, **dadurch gekennzeichnet, dass** ein Teil der externen Lichtquellen (5) im sichtbaren Bereich und ein Teil im nahinfraroten Bereich mit einer Wellenlänge von 800 bis 900 nm ausstrahlen, so dass sowohl herkömmliche Barcodes als auch im Nahinfrarotbereich auslesbare Barcodes mittels des 2D-Barcode-Scanners (1) ausgelesen werden.

## Claims

1. A 2D barcode scanner (1), comprising a housing (2) with a reading window (3) and a digital camera (4) arranged in the housing (2) for detecting the region of the reading window (3) directly or via a mirror arrangement (8, 9), wherein to illuminate a region in front of the reading window (3), on the side of the reading window (3) facing away from the digital camera (4) a plurality of external light sources (5) arranged in the housing (2) are provided, wherein a homogeneous luminosity in the plane of the reading window (3) is only achieved by means of all of the external light sources (5), **characterized in that** the external light sources (5) are each provided with an auxiliary lens (7), by means of which the light from the external light sources (5) is distributed in such a way that the reflection paths for the external light sources (5) produced at the inner side of the reading window (3) back into the camera (4) are either not illuminated at all or only with a very low intensity, as a result of which light reflections occurring at the inner side of the reading window (3), which are superimposed on the bar code to be scanned as very bright spots in the image of the digital camera (4), are prevented or the intensity thereof is significantly reduced, that the auxiliary lens (7) assigned to the external light sources (5) is individually designed for each light source (5) and the arrangement and orientation thereof, and that the regions of the plane of the reading window (3) that correspond to reflection paths of a light source (5) are illuminated by light sources (5) for which these regions do not represent a reflection path.

2. The 2D barcode scanner (1) according to claim 1, **characterized in that** the external light sources (5) are arranged in such a way that the location of the very bright spots produced in the image of the digital camera (4) is displaced to an edge of the reading window (3), in which scanning of a barcode is less frequent or less probable.

3. The 2D barcode scanner (1) according to claim 1 or 2, **characterized in that** the external light sources (5) are arranged in the plane of the digital camera (4) of the 2D barcode scanner (1).

4. The 2D barcode scanner (1) according to Claim 1, 2 or 3, **characterized in that** one part of the external light sources (5) emit radiation in the visible range and another part in the near-infrared range with a wavelength of 800 to 900 nm, so that both conventional barcodes and barcodes that can be scanned in the near-infrared range are scanned by means of the 2D barcode scanner (1).

## Revendications

1. Scanner de code-barres 2D (1) comprenant un boîtier (2) avec une fenêtre de lecture (3) et une caméra numérique (4) disposée dans le boîtier (2) pour la détection de la zone de la fenêtre de lecture (3), directement ou via un dispositif de miroir (8, 9), dans lequel, pour l'éclairage d'une zone devant la fenêtre de lecture (3), sur le côté de la fenêtre de lecture (3) tournant le dos à la caméra numérique (4), plusieurs sources lumineuses externes (5) disposées dans le boîtier (2) sont prévues, dans lequel c'est seulement grâce à l'ensemble des sources lumineuses externes (5) qu'une intensité d'éclairage homogène dans le plan de la fenêtre de lecture (3) est atteinte, **caractérisé en ce que** les sources lumineuses externes (5) sont respectivement dotées d'une optique additionnelle (7) grâce à laquelle la lumière des sources lumineuses externes (5) est répartie de telle sorte que les trajets de réflexion produits pour les sources lumineuses externes (5) du côté intérieur de la fenêtre de lecture (3) en retour dans la caméra (4) ne sont pas éclairés, ou seulement avec une très faible intensité, moyennant quoi des réflexions de lumière produites du côté intérieur de la fenêtre de lecture (3), lesquelles se superposent au code-barres à lire en tant que spots très lumineux dans l'image de la caméra numérique (4), sont évitées ou voient leur intensité réduite de manière significative, que l'optique additionnelle (7) associée aux sources lumineuses externes (5) est réalisée individuellement pour la source lumineuse (5) respective et la disposition et l'orientation de celle-ci, et que les zones du plan de la fenêtre de lecture (3), lesquelles correspondent à des trajets de réflexion d'une source lumineuse (5), sont éclairées par des sources lumineuses (5) pour lesquelles ces zones ne constituent pas de trajet de réflexion.

2. Scanner de code-barres 2D (1) selon la revendication 1, **caractérisé en ce que** les sources lumineuses externes (5) sont disposées de telle sorte que l'emplacement des spots très lumineux produits dans l'image de la caméra numérique (4) est déplacé vers un bord de la fenêtre de lecture (3) où une lecture d'un code-barres a lieu moins souvent ou est moins probable.

3. Scanner de code-barres 2D (1) selon la revendication 1 ou 2, **caractérisé en ce que** les sources lumineuses externes (5) sont disposées dans le plan de la caméra numérique (4) du scanner de code-barres 2D (1).

4. Scanner de code-barres 2D (1) selon la revendication 1, 2 ou 3, **caractérisé en ce qu'**une partie des sources lumineuses externes (5) rayonnent dans la plage visible et une partie, dans la plage de l'infrarouge proche avec une longueur d'onde de 800 à 900 nm, de sorte que des code-barres usuels tout comme également des code-barres lisibles dans la plage de l'infrarouge proche sont lus au moyen du scanner de code-barres 2D (1) .
